(19) Europäisches Patentamt / European Patent Office / Office européen des brevets

(11) **EP 2 445 216 A1**

(12) **EUROPEAN PATENT APPLICATION**
published in accordance with Art. 153(4) EPC

(43) Date of publication:
**25.04.2012 Bulletin 2012/17**

(21) Application number: **10789156.6**

(22) Date of filing: **25.05.2010**

(51) Int Cl.:
***H04N 7/32*** *(2006.01)*

(86) International application number:
**PCT/JP2010/003492**

(87) International publication number:
**WO 2010/146771 (23.12.2010 Gazette 2010/51)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **19.06.2009 JP 2009146350**

(71) Applicant: **Mitsubishi Electric Corporation
Tokyo 100-8310 (JP)**

(72) Inventors:
- **MINEZAWA, Akira**
  **Tokyo 100-8310 (JP)**
- **SEKIGUCHI, Shunichi**
  **Tokyo 100-8310 (JP)**
- **SUGIMOTO, Kazuo**
  **Tokyo 100-8310 (JP)**
- **ITANI, Yusuke**
  **Tokyo 100-8310 (JP)**
- **MORIYA, Yoshimi**
  **Tokyo 100-8310 (JP)**
- **HIWASA, Norimichi**
  **Tokyo 100-8310 (JP)**
- **YAMAGISHI, Shuichi**
  **Tokyo 100-8310 (JP)**
- **YAMADA, Yoshihisa**
  **Tokyo 100-8310 (JP)**
- **KATO, Yoshiaki**
  **Tokyo 100-8310 (JP)**
- **ASAI, Kohtaro**
  **Tokyo 100-8310 (JP)**
- **MURAKAMI, Tokumichi**
  **Tokyo 100-8310 (JP)**

(74) Representative: **Pfenning, Meinig & Partner GbR
Patent- und Rechtsanwälte
Theresienhöhe 13
80339 München (DE)**

(54) **IMAGE ENCODING DEVICE, IMAGE DECODING DEVICE, IMAGE ENCODING METHOD, AND IMAGE DECODING METHOD**

(57) A loop filter 6 includes a region classifying unit 12 for extracting a feature quantity of each of the regions which construct a local decoded image to classify each of the regions into the class to which the region belongs according to the feature quantity, and a filter designing and processing unit 13 for, for each class to which one or more regions, among the regions which construct the local decoded image, belong, generating a Wiener filter which minimizes an error occurring between an inputted image and the local decoded image in each of the one or more regions belonging to the class to compensate for a distortion superimposed onto the one or more regions by using the Wiener filter.

FIG.2

**Description**

Field of the Invention

The present invention relates to an image encoding device for and an image encoding method of compression-encoding and transmitting an image, and an image decoding device for and an image decoding method of decoding encoded data transmitted by the image encoding device to reconstruct an image.

Background of the Invention

Conventionally, in accordance with international standard video encoding methods, such as MPEG and ITU-T H.26x, after an input video frame is divided into macro blocks each of which is a 16x16 pixel block and a motion-compensated prediction is performed on each macro block, information compression is carried out by performing orthogonal transformation and quantization on a prediction error signal in units of a block.
A problem is, however, that as the compression ratio becomes high, the compression efficiency is reduced resulting from degradation in the quality of a prediction reference image which is used when carrying out the motion-compensated prediction.
To solve this problem, in accordance with an encoding method, such as MPEG-4 AVC/H.264 (refer to nonpatent reference 1), a block distortion which occurs in a prediction reference image with quantization of orthogonal transformation coefficients is tried to be removed by performing a blocking filter process within a loop.

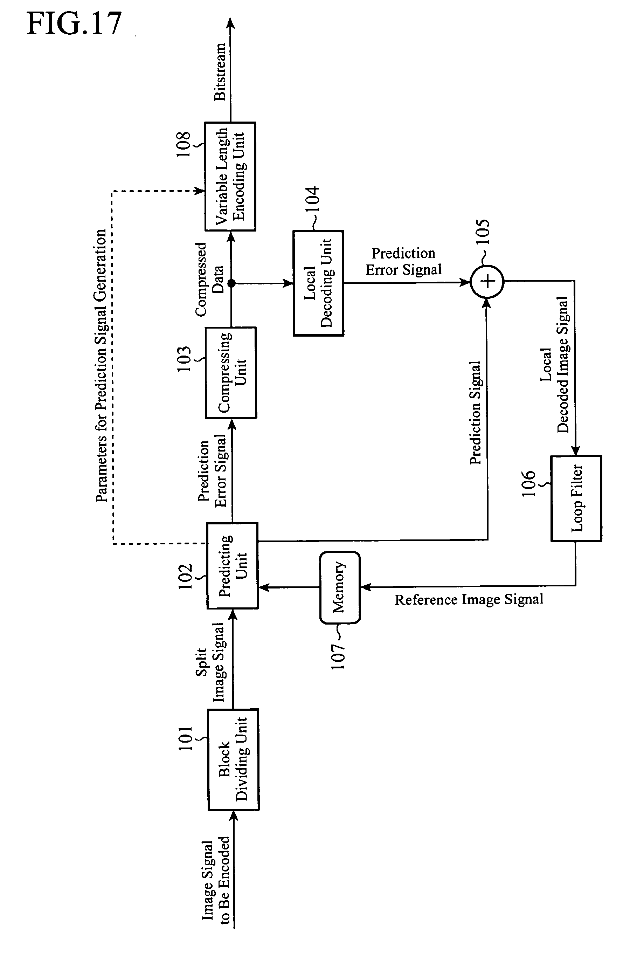

Fig. 17 is a block diagram showing an image encoding device disclosed in nonpatent reference 1.
In this image encoding device, when receiving an image signal which is a target to be encoded, a block dividing unit 101 divides the image signal into macro blocks, and outputs an image signal in units of a macro block to a predicting unit 102 as a split image signal.
When receiving the split image signal from the block dividing unit 101, the predicting unit 102 calculates a prediction error signal by predicting an image signal of each color component in each macro block within the frame or between frames.
Particularly, when carrying out a motion-compensated prediction between frames, the predicting unit searches for a motion vector in units of either a macro block itself or each of subblocks into which each macro block is more finely divided.
The predicting unit then performs a motion-compensated prediction on a reference image signal stored in a memory 107 by using the motion vector to generate a motion-compensated prediction image, and determines the difference between a prediction signal showing the motion-compensated prediction image and the split image signal to calculate a prediction error signal.
The predicting unit 102 also outputs parameters for prediction signal generation which the predicting unit has determined when acquiring the prediction signal to a variable length encoding unit 108.
For example, the parameters for prediction signal generation include pieces of information such as an intra prediction mode showing how to perform a space prediction within each frame, and a motion vector showing an amount of motion between frames.
When receiving the prediction error signal from the predicting unit 102, a compressing unit 103 quantizes the prediction error signal to acquire compressed data after performing a DCT (discrete cosine transform) process on the prediction error signal to remove a signal correlation from this prediction error signal.
When receiving the compressed data from the compressing unit 103, a local decoding unit 104 carries out inverse quantization of the compressed data and then performs an inverse DCT process on the compressed data inverse-quantized thereby to calculate a prediction error signal corresponding to the prediction error signal outputted from the predicting unit 102.
When receiving the prediction error signal from the local decoding unit 104, an adder 105 adds the prediction error signal and the prediction signal outputted from the predicting unit 102 to generate a local decoded image.
A loop filter 106 removes a block distortion superimposed onto the local decoded image signal showing the local decoded image generated by the adder 105, and stores the distortion-removed local decoded image signal in the memory 107 as the reference image signal.
When receiving the compressed data from the compressing unit 103, the variable length encoding unit 108 entropy-encodes the compressed data to output a bit stream which is the encoded result.
When outputting the bit stream, the variable length encoding unit 108 multiplexes the parameters for prediction signal generation outputted from the predicting unit 102 into the bit stream and outputs this bitstream.
In accordance with the method disclosed in nonpatent reference 1, the loop filter 106 determines the smoothing intensity according to information including the quantization resolution, the encoding mode, the variation degree of motion vector, etc. for pixels in the vicinity of a block border of DCT to provide a reduction in the distortion occurring in the block border.

As a result, the quality of the reference image signal can be improved, and the efficiency of the motion-compensated prediction in subsequent encoding processes can be improved.

In contrast, a problem with the method disclosed in nonpatent reference 1 is that higher frequency components of the signal are lost with increase in the compression rate at which the signal is encoded, and therefore the entire screen is smoothed too much and the encoded video becomes blurred.

In order to solve this problem, nonpatent reference 2 discloses a technique of applying a Wiener filter as the loop filter 106, and forming this loop filter 106 in such a way that a squared error distortion between an image signal to be encoded, which is an original image signal, and a reference image signal corresponding to this image signal is minimized.

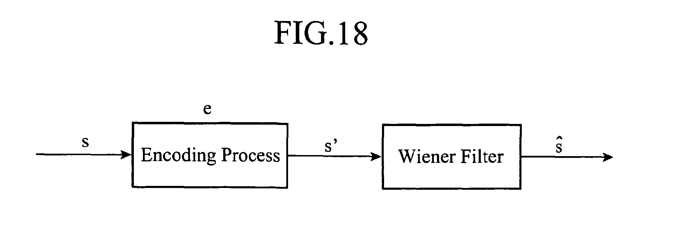

Fig. 18 is an explanatory drawing showing the principle to improve the quality of the reference image signal using a Wiener filter in the image encoding device disclosed in nonpatent reference 2.

In Fig. 18, a signal s corresponds to an image signal to be encoded which is inputted to the block dividing unit 101 shown in Fig. 17, and a signal s' corresponds to either the local decoded image signal outputted from the adder 105 shown in Fig. 17, or the local decoded image signal in which a distortion occurring in a block border is reduced by the loop filter 106 disclosed in nonpatent reference 1.

More specifically, the signal s' is the one in which an encoding distortion (noise) e is superimposed onto the signal s.

A Wiener filter is defined as a filter which is applied to the signal s' in such a way as to minimize this encoding distortion (noise) e with a squared error distortion criterion. Typically, filter coefficients w can be determined by using the following equation (1) from both an autocorrelation matrix $R_{s's'}$ of the signal s', and a cross correlation matrix $R_{ss'}$ between the signals s and s'. The size of the matrices $R_{s's'}$ and $R_{ss'}$ corresponds to the number of taps of the determined filter.

$$ w = R_{s's'}^{-1} \cdot R_{ss'} \qquad (1) $$

By applying the Wiener filter having the filter coefficients w, a signal s hat whose quality has been improved ("^" attached to an alphabetical letter is referred to as hat because this application is an electronic patent application in Japan) is acquired as a signal corresponding to the reference image signal. The image encoding device disclosed in nonpatent reference 2 determines the filter coefficients w in each of two or more different numbers of taps for the whole of each frame of the image which is the target to be encoded, and, after determining the filter having a number of taps which optimizes the amount of code of the filter coefficients w and the distortion (e'=s hat - s), which is calculated after the filtering process is implemented, with the rate distortion criterion, further divides the signal s' into a plurality of blocks each having a certain size, selects whether or not to apply the Wiener filter having the optimal number of taps which is determined above to each block, and transmits information about filter ON/OFF for each block.

As a result, the additional amount of code required to perform the Wiener filter process can be reduced, and the quality of the prediction image can be improved.

Related art document

Nonpatent reference

Nonpatent reference 1: MPEG-4 AVC (ISO/IEC 14496-10)/H.ITU-T 264 standards
Nonpatent reference 2: T.Chujoh, G.Yasuda, N.Wada, T.Watanabe, T.Yamakage, "Block-based Adaptive Loop Filter", VCEG-AI18, ITU-T SG16/Q.6 meeting, July 2008

Summary of the Invention

Because the conventional image encoding device is constructed as above, a single Wiener filter is designed for the whole of the frame which is the target to be encoded, information showing whether or not to apply the Wiener filter process is applied to each of the blocks which construct each frame. A problem is, however, that because the same Wiener filter is applied to any block of each frame, there is a case that the Wiener filter is not always an optimal filter to each block and the image quality cannot be improved sufficiently.

The present invention is made in order to solve the above-mentioned problem, and it is therefore an object of the present invention to provide an image encoding device, an image decoding device, an image encoding method, and an image decoding method which can improve the improvement accuracy of the image quality.

In accordance with the present invention, there is provided an image encoding device in which a filtering unit includes a region classifying unit for extracting a feature quantity of each of the regions which construct a local decoded image acquired by a local decoding unit to classify each of the regions into a class to which the region belongs according to the feature quantity, and a filter designing and processing unit for, for each class to which one or more regions, among the regions which construct the local decoded image, belong, generating a filter which minimizes an error occurring between an inputted image and the local decoded image in each of the one or more regions belonging to the class to compensate for a distortion superimposed onto the one or more regions by using the filter.

Because the filtering unit in accordance with the present invention includes the region classifying unit for extracting a feature quantity of each of the regions which construct a local decoded image acquired by the local decoding unit to classify each of the regions into a class to which the region belongs according to the feature quantity, and the filter designing and processing unit for, for each class to which one or more regions, among the regions which construct the local decoded image, belong, generating a filter which minimizes an error occurring between an inputted image and the local decoded image in each of the one or more regions belonging to the class to compensate for a distortion superimposed onto the one or more regions by using the filter, there is provided an advantage of being able to improve the improvement accuracy of the image quality.

Brief Description of the Figures

[Fig. 1] Fig. 1 is a block diagram showing an image encoding device in accordance with Embodiment 1 of the present invention;
[Fig. 2] Fig. 2 is a block diagram showing a loop filter 6 of the image encoding device in accordance with Embodiment 1 of the present invention;
[Fig. 3] Fig. 3 is a flow chart showing a process carried out by the loop filter 6 of the image encoding device in accordance with Embodiment 1 of the present invention;
[Fig. 4] Fig. 4 is an explanatory drawing showing an example of classes into which four regions (a region A, a region B, a region C, and a region D) which construct a local decoded image are classified;
[Fig. 5] Fig. 5 is an explanatory drawing showing 16 blocks (K) which construct the local decoded image;
[Fig. 6] Fig. 6 is an explanatory drawing showing an example of a bit stream generated by a variable length encoding part 8;
[Fig. 7] Fig. 7 is a block diagram showing an image decoding device in accordance with Embodiment 1 of the present invention;
[Fig. 8] Fig. 8 is a block diagram showing a loop filter 25 of the image decoding device in accordance with Embodiment 1 of the present invention;
[Fig. 9] Fig. 9 is a block diagram showing a loop filter 25 of the image decoding device in accordance with Embodiment 1 of the present invention;
[Fig. 10] Fig. 10 is a flow chart showing a process carried out by the loop filter 25 of the image decoding device in accordance with Embodiment 1 of the present invention;
[Fig. 11] Fig. 11 is a flow chart showing a process carried out by a loop filter 6 of an image encoding device in accordance with Embodiment 2 of the present invention;
[Fig. 12] Fig. 12 is an explanatory drawing showing an example of selection of a Wiener filter for each of the blocks (K) which construct a local decoded image;
[Fig. 13] Fig. 13 is a flow chart showing a process carried out by a loop filter 25 of an image decoding device in accordance with Embodiment 2 of the present invention;
[Fig. 14] Fig. 14 is a flow chart showing a process carried out by a loop filter 6 of an image encoding device in accordance with Embodiment 3 of the present invention;
[Fig. 15] Fig. 15 is a flow chart showing a process on the first frame carried out by the loop filter 6;
[Fig. 16] Fig. 16 is a flow chart showing a process on a second or subsequent frame carried out by the loop filter 6;
[Fig. 17] Fig. 17 is a block diagram showing an image encoding device disclosed in nonpatent reference 1; and
[Fig. 18] Fig. 18 is an explanatory drawing showing the principle to improve the quality of a reference image signal using a Wiener filter.

Embodiments of the Invention

Hereafter, in order to explain this invention in greater detail, the preferred embodiments of the present invention will be described with reference to the accompanying drawings.

Embodiment 1.

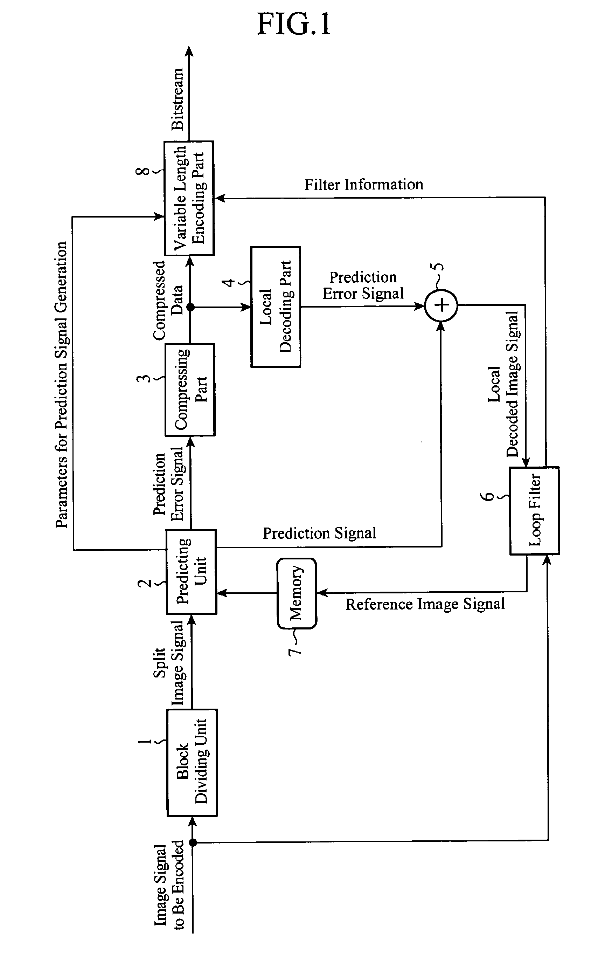

Fig. 1 is a block diagram showing an image encoding device in accordance with Embodiment 1 of the present invention. In Fig. 1, a block dividing unit 1 carries out a process of dividing an image signal which is an inputted image and which is a target to be encoded into macro blocks, and outputting an image signal in units of a macro block to a predicting unit 2 as a split image signal.

When receiving the split image signal from the block dividing unit 1, the predicting unit 2 performs a predicting process on the split image signal within the frame or between frames to generate a prediction signal.

Particularly, when carrying out a motion-compensated prediction between frames, the predicting unit detects a motion vector in units of a macro block or each of subblocks into which a macro block is more finely divided from both the split image signal and a reference image signal showing a reference image stored in a memory 7 to generate a prediction signal showing a prediction image from both the motion vector and the reference image signal.

After generating the prediction signal, the predicting unit then carries out a process of calculating a prediction error signal which is the difference between the split image signal and the prediction signal.

Furthermore, when generating the prediction signal, the predicting unit 2 determines parameters for prediction signal generation, and outputs the parameters for prediction signal generation to a variable length encoding part 8.

For example, the parameters for prediction signal generation include pieces of information such as an intra prediction mode showing how to perform a spatial prediction within the frame, and a motion vector showing an amount of motion between frames.

A prediction processing unit is comprised of the block dividing unit 1 and the predicting unit 2.

A compressing unit 3 carries out a process of carrying out a DCT (discrete cosine transform) process on the prediction error signal calculated by the predicting unit 2 to calculate DCT coefficients while quantizing the DCT coefficients to output compressed data which are the DCT coefficients quantized thereby to a local decoding part 4 and the variable length encoding part 8. The compressing unit 3 constructs a difference image compression unit.

The local decoding part 4 carries out a process of carrying out inverse quantization of the compressed data outputted from the compressing unit 3 and performing an inverse DCT process on the compressed data inverse-quantized thereby to calculate a prediction error signal corresponding to the prediction error signal outputted from the predicting unit 2.

An adder 5 carries out a process of adding the prediction error signal calculated by the local decoding part 4 and the prediction signal generated by the predicting unit 2 to generate a local decoded image signal showing a local decoded image.

A local decoding unit is comprised of the local decoding part 4 and the adder 5.

A loop filter 6 carries out a process of performing a filtering process of compensating for a distortion superimposed onto the local decoded image signal generated by the adder 5 to output the local decoded image signal filtered thereby to the memory 7 as the reference image signal while outputting information about the filter which the loop filter uses when carrying out the filtering process to the variable length encoding part 8. The loop filter 6 constructs a filtering unit.

The memory 7 is a recording medium for storing the reference image signal outputted from the loop filter 6.

The variable length encoding part 8 carries out a process of entropy-encoding the compressed data outputted from the compressing unit 3, the filter information outputted from the loop filter 6, and the parameters for prediction signal generation outputted from the predicting unit 2 to generate a bit stream showing these encoded results. The variable length encoding part 8 constructs a variable length encoding unit.

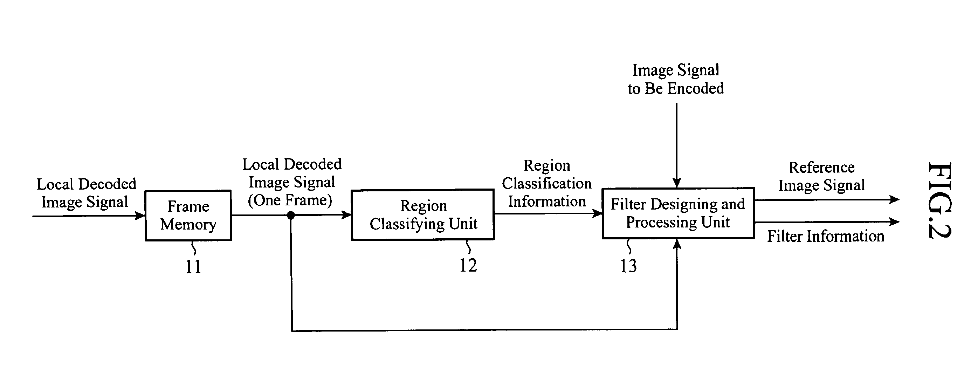

Fig. 2 is a block diagram showing the loop filter 6 of the image encoding device in accordance with Embodiment 1 of the present invention.

In Fig. 2, a frame memory 11 is a recording medium for storing only one frame of the local decoded image signal generated by the adder 5.

A region classifying unit 12 carries out a process of extracting a feature quantity of each of the of regions which construct a local decoded image shown by one frame of the local decoded image signal stored in the frame memory 11 to classify each of the regions into the class to which the region belongs according to the feature quantity.

A filter designing and processing unit 13 carries out a process of generating, for each class to which one or more regions included in the regions which construct the local decoded image belongs, a Wiener filter which minimizes an error occurring between the image signal which is the target to be encoded and the local decoded image signal in each of the one or more regions which belong to the class, and using the Wiener filter to compensate for the distortion superimposed onto the region.

The filter designing and processing unit 13 also carries out a process of outputting filter information about the Wiener filter to the variable length encoding part 8.

Next, the operation of the image encoding device will be explained.

When receiving an image signal which is a target to be encoded, the block dividing unit 1 divides the image signal into macro blocks, and output an image signal in units of a macro block to the predicting unit 2 as a split image signal.

When receiving the split image signal from the block dividing unit 1, the predicting unit 2 detects parameters for prediction signal generation which the predicting unit uses to perform a predicting process on the split image signal within the frame or between frames. Then, the predicting unit generates a prediction signal showing a prediction image using the parameters for prediction signal generation.

Particularly, the predicting unit detects a motion vector which is a parameter for prediction signal generation used for performing a predicting process between frames from the split image signal and the reference image signal stored in the memory 7.

After detecting the motion vector, the predicting unit 2 then generates the prediction signal by performing a motion-compensated prediction on the reference image signal by using the motion vector.

After generating the prediction signal showing the prediction image, the predicting unit 2 calculates a prediction error signal which is the difference between the prediction signal and the split image signal, and outputs the prediction error signal to the compressing unit 3.

When generating the prediction signal, the predicting unit 2 also determines the parameters for prediction signal generation and outputs the parameters for prediction signal generation to the variable length encoding part 8.

For example, the parameters for prediction signal generation include pieces of information such as an intra prediction mode showing how to perform a spatial prediction within the frame, and a motion vector showing an amount of motion between frames.

When receiving the prediction error signal from the predicting unit 2, the compressing unit 3 calculates DCT coefficients by performing a DCT (discrete cosine transform) process on the prediction error signal, and then quantizes the DCT coefficients.

The compressing unit 3 then outputs compressed data which are the DCT coefficients quantized thereby to the local decoding part 4 and the variable length encoding part 8.

When receiving the compressed data from the compressing unit 3, the local decoding part 4 carries out inverse quantization of the compressed data and then carries an inverse DCT process on the compressed data inverse-quantized thereby to calculate a prediction error signal corresponding to the prediction error signal outputted from the predicting unit 2.

After the local decoding part 4 calculates the prediction error signal, the adder 5 adds the prediction error signal and the prediction signal generated by the predicting unit 2 to generate a local decoded image signal showing a local decoded image.

After the adder 5 generates the local decoded image signal, the loop filter 6 carries out a filtering process of compensating for the distortion superimposed onto the local decoded image signal, and stores the local decoded image signal filtered thereby in the memory 7 as the reference image signal.

The loop filter 6 also outputs information about the filter which the loop filter uses when carrying out the filtering process to the variable length encoding part 8.

The variable length encoding part 8 carries out the process of entropy-encoding the compressed data outputted from the compressing unit 3, the filter information outputted from the loop filter 6, and the parameters for prediction signal generation outputted from the predicting unit 2 to generate a bit stream showing these encoded results.

At this time, although the variable length encoding unit also entropy-encodes the parameters for prediction signal generation, the image encoding device can alternatively multiplex the parameters for prediction signal generation into the bit stream, which the image encoding device generates, and output this bit stream without entropy-encoding the parameters for prediction signal generation.

Hereafter, the process performed by the loop filter 6 will be explained concretely.

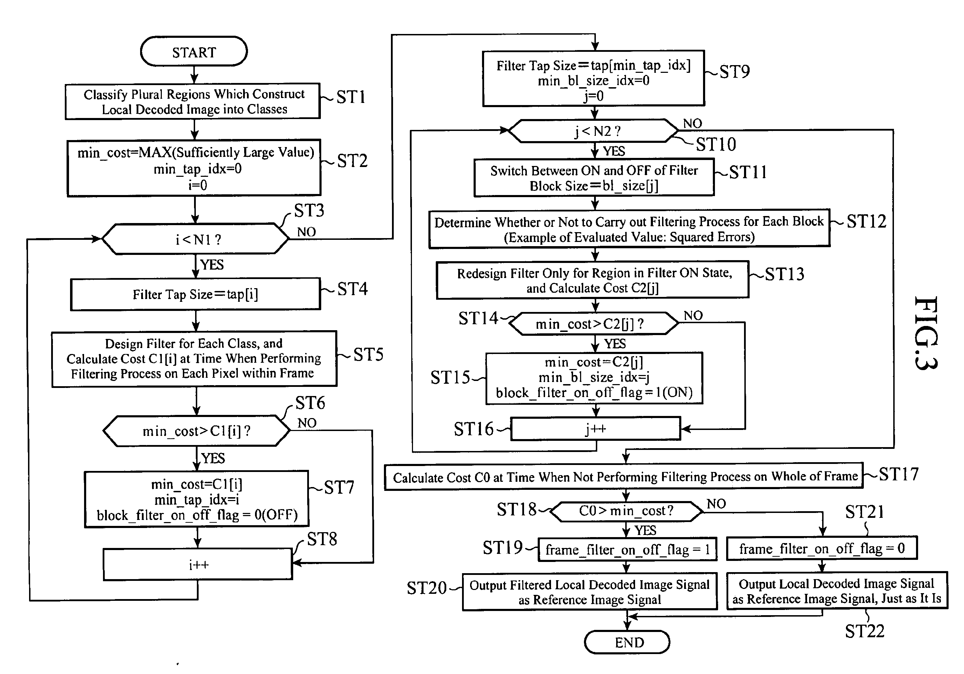

Fig. 3 is a flow chart showing the process performed by the loop filter 6 of the image encoding device in accordance with Embodiment 1 of the present invention.

First, the frame memory 11 of the loop filter 6 stores only one frame of the local decoded image signal generated by the adder 5.

The region classifying unit 12 extracts a feature quantity of each of the regions which construct the local decoded image shown by the single frame of the local decoded image,signal stored in the frame memory 11, and classifies each of the regions into the class to which the region belongs according to the feature quantity (step ST1).

For example, for each region (each block having an arbitrary size ($M \times M$ pixels)), the region classifying unit extracts a variance of the local decoded image signal, the DCT coefficients, the motion vector, the quantization parameter of the DCT coefficients, or the like in the region as the feature quantity, and carries out the class classification on the basis of these pieces of information. In this case, M is an integer equal to or larger than 1.

For example, when the variance of the local decoded image signal in the region is used as the feature quantity in a case in which each of the regions is classified to one of class 1 to class N (N is an integer equal to or larger than 1), (N-1) thresholds are prepared beforehand and the variance of the local decoded image signal is compared with each of the (N-1) thresholds ($th_1 < th_2 < ... < th_{N-1}$), and the class to which the region belongs is identified.

For example, when the variance of the local decoded image signal is equal to or larger than $th_{N-3}$ and is smaller than th$_{N-2}$, the region is classified to the class N-2. Furthermore, when the variance of the local decoded image signal is equal to or larger than th$_2$ and is smaller than th$_3$, the region is classified to the class 3.

In this case, although the example in which the (N-1) thresholds are prepared beforehand is shown, these thresholds can be changed dynamically for each sequence or each frame.

For example, when using the motion vector in the region as the feature quantity, the region classifying unit calculates a mean vector which is the mean of motion vectors or a median vector which is the median value of motion vectors, and identifies the class to which the region belongs according to the magnitude or direction of the vector.

In this case, the mean vector has components (x and y components) each of which is the mean value of the corresponding components of the motion vectors.

In contrast, the median vector has components (x and y components) each of which is the median value of the corresponding components of the motion vectors.

When the region classifying unit 12 classifies each of the regions into one of the classes 1 to N, the filter designing and processing unit 13 generates, for each class to which one or more regions included in the regions which construct the local decoded image belongs, a Wiener filter which minimizes an error occurring between the image signal which is the target to be encoded and the local decoded image signal in each of the one or more regions which belong to the class (steps ST2 to ST8).

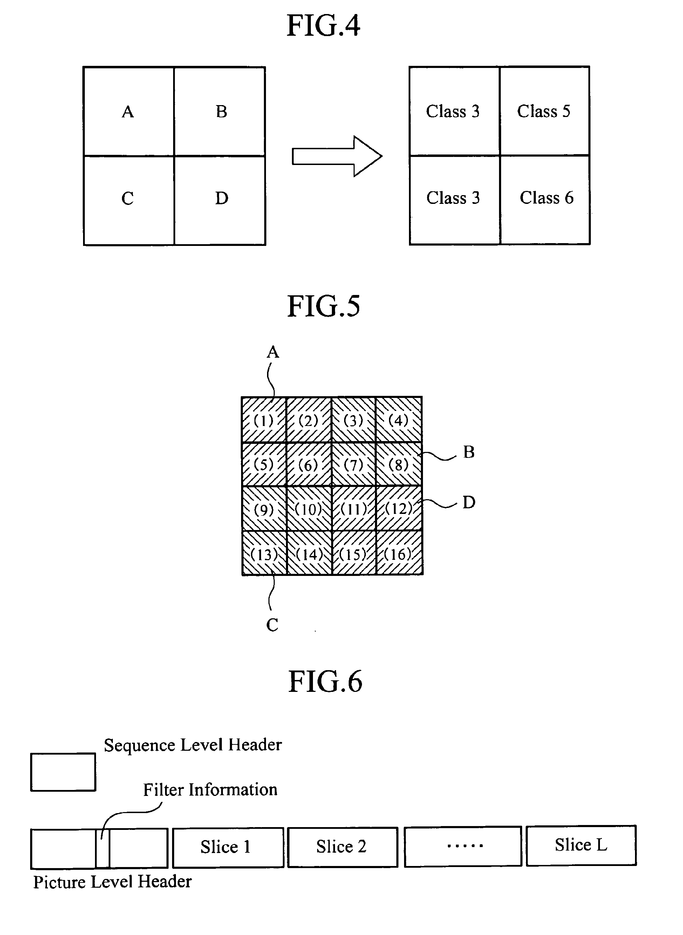

For example, in a case in which the local decoded image consists of four regions (a region A, a region B, a region C, and a region D) as shown in Fig. 4, when the regions A and C are classified into the class 3, the region B is classified into the class 5, and the region D is classified into the class 6, the filter designing and processing unit generates a Wiener filter which minimizes the error occurring between the image signal which is the target to be encoded and the local decoded image signal in each of the regions A and C belonging to the class 3.

The filter designing and processing unit further generates a Wiener filter which minimizes the error occurring between the image signal which is the target to be encoded and the local decoded image signal in the region B belonging to the class 5, and also generates a Wiener filter which minimizes the error occurring between the image signal which is the target to be encoded and the local decoded image signal in the region D belonging to the class 6.

For example, in a case of designing a filter with a variable number of taps when generating a Wiener filter which minimizes the error, the filter designing and processing unit 13 calculates a cost as will be shown below for each different number of taps, and then determines the number of taps and the coefficient values of the filter which minimize the cost.

$$\text{Cost} = D + \lambda \cdot R \qquad\qquad (2)$$

where D is the sum of squared errors between the image signal which is the target to be encoded in the region to which the target filter is applied, and the local decoded image signal filtered, $\lambda$ is a constant, and R is the amount of codes which are generated in the loop filter 6.

Although in this case the cost is given by the equation (2), this case is only an example. For example, only the sum of squared errors D can be defined as the cost.

Furthermore, another evaluated value such as the sum of absolute error values can be used instead of the sum of squared errors D.

After generating a Wiener filter for each class to which one or more regions belong, the filter designing and processing unit 13 determines whether or not each of the blocks which construct the local decoded image (e.g. each of local regions which is smaller than each of the regions A to D which constructs the local decoded image) is a block on which the filter designing and processing unit should perform the filtering process (steps ST9 to ST16).

More specifically, for each of the blocks which construct the local decoded image, the filter designing and processing unit 13 compares errors occurring between the image signal which is the target to be encoded and the local decoded image signal in the block between before and after the filtering process.

For example, in a case in which the local decoded image consists of 16 blocks (K) (K=1, 2, ..., and 16), as shown in Fig. 5, the filter designing and processing unit compares the sum of squared errors occurring between the image signal which is the target to be encoded and the local decoded image signal in each block (K) between before and after the filtering process.

A block 1, a block 2, a block 5, and a block 6 shown in Fig. 5 correspond to the region A shown in Fig. 4, a block 3, a block 4, a block 7, and a block 8 shown in Fig. 5 correspond to the region B shown in Fig. 4, a block 9, a block 10, a block 13, and a block 14 shown in Fig. 5 correspond to the region C shown in Fig. 4, and a block 11, a block 12, a block 15, and a block 16 shown in Fig. 5 correspond to the region D shown in Fig. 4.

Although the filter designing and processing unit compares the sum of squared errors between before and after the filtering process, the filter designing and processing unit can alternatively compare either the cost (D+$\lambda$ · R) shown by the equation (2) or the sum of absolute error values between before and after the filtering process.

When the sum of squared errors acquired after the filtering process is smaller than the sum of squared errors acquired before the filtering process, the filter designing and processing unit 13 determines that the block (K) is a block which is a target for filtering.

In contrast, when the sum of squared errors acquired after the filtering process is equal to or larger than the sum of squared errors acquired before the filtering process, the filter designing and processing unit determines that the block (K) is a block which is not a target for filtering.

The filter designing and processing unit 13 then calculates the cost at the time when performing the filtering process which causes the cost to become a minimum in the steps ST1 to ST16 and the cost at the time when not performing the filtering process on the whole of the frame currently processed to determine whether or not to perform the filtering process on the whole of the frame currently processed (steps ST17 to ST18).

When, in step ST18, determining to perform the filtering process on the whole of the frame, the filter designing and processing unit sets a flag (frame_filter_on_off_flag) to 1 (ON), and then performs the filtering process which causes the cost to become a minimum in the steps ST1 to ST16 and outputs the local decoded image signal on which the filter designing and processing unit has performed the filtering process to the memory 7 as the reference image signal (steps ST19 to ST20).

For example, when the region including the block (K) is the region B and the class to which the region B belongs is the class 5, the filter designing and processing unit performs the filtering process on the block (K) by using the Wiener filter of the class 5, and outputs the local decoded image signal on which the filter designing and processing unit has performed the filtering process to the memory 7 as the reference image signal.

At this time, when, in steps ST1 to ST16, determining that the cost is minimized when the process of selecting whether or not to carry out the filtering process for each block is carried out (at the time of the flag (block_filter_on_off_flag)=1 (ON)), the filter designing and processing unit outputs the yet-to-be-filtered local decoded image signal for the block (K) on which the filter designing and processing unit has determined not to perform the filtering process to the memory 7 as the reference image signal, just as it is, without performing the filtering process on the block (K). In contrast, when, in steps ST1 to ST16, determining that the cost is minimized when the process of selecting whether or not to carry out the filtering process for each block is not carried out (at the time of the flag (block_filter_on_off_flag)=0 (OFF)), the filter designing and processing unit performs the filtering process on each of all the local decoded image signals in the frame by using the Wiener filter of the class into which the region to which the local decoded image signal belongs is classified, and outputs the local decoded image signal on which the filter designing and processing unit has performed the filtering process to the memory 7 as the reference image signal.

In contrast, when, in step ST18, determining not to perform the filtering process on the whole of the frame, the filter designing and processing unit sets the flag (frame_filter_on_off_flag) to 0 (OFF), and outputs the yet-to-be-filtered local decoded image signal to the memory 7 as the reference image signal, just as it is (steps ST21 to ST22).

In steps ST2 to ST22 in the flow chart, "min_cost" is a variable for storing the minimum cost, "i" is an index of the number of filter taps tap[i] and a loop counter, and "j" is an index of the block size bl_size[j] and a loop counter. Furthermore, "min_tap_idx" is an index (i) of the number of filter taps at the time when the cost is minimized, "min_bl_size_idx" is an index (j) of the block size at the time when the cost is minimized, and "MAX" is an initial value of the minimum cost (a sufficiently large value).

tap[i] (i=0 to N1)

A sequence in which N1 (N1>=1) different numbers of filter taps, which are determined beforehand and each of which can be selected, are stored.

· bl_size [j] (j=0 to N2)

A sequence in which N2 (N2>=1) different block sizes (bl_size [j] × bl_size[j] pixels), which are determined beforehand and each of which can be selected, are stored.

· block_filter_on_off_flag

The flag showing whether or not to carry out the process of selecting whether or not to carry out the filtering process for each block in the frame currently processed.

· frame_filter_on_off_flag

The flag showing whether or not to carry out the filtering process for the frame currently processed.

Step ST2 is the step of setting up initial values, and steps ST3 to ST8 are a loop for carrying out the process of selecting the number of filter taps.

Furthermore, step ST9 is a step of setting up initial values, and steps ST10 to ST16 are a loop for carrying out the process of selecting the block size and the process of determining whether or not to carry out the filtering process for each block having the selected block size.

In addition, steps ST17 to ST18 are the steps of determining whether or not to perform the filtering process on the whole of the frame currently processed, steps ST19 to ST20 are the steps of carrying out the optimal filtering process which is determined in steps ST1 to ST16 with frame_filter_on_off_flag=1 (ON), and steps ST21 to ST22 are the steps of setting frame_filter_on_off_flag to 0 (OFF) and not carrying out the filtering process for the frame currently processed.

After generating the Wiener filter and then carrying out the filtering process in the above-mentioned way, the filter design and the processing unit 13 outputs the filter information about the Wiener filter to the variable length encoding part 8.

The filter information includes the flag (frame_filter_on_off_flag) showing whether or not to carry out the filtering process for the frame currently processed.

When this flag is set to ON (shows that the filtering process is carried out), information as will be shown below is included in the filter information.

(1) The number of Wiener filters (the number of classes to each of which one or more regions belong)

· The number of Wiener filters can differ for each frame. (2) Information (index) about the number of taps of each Wiener filter
· When all the filters are common in the frame, a common number of taps is included.
· When the number of taps differs for each filter, the number of taps of each filter is included.

(3) Information about the coefficients of an actually-used Wiener filter (a Wiener filter of each class to which one or more regions belong)

· Even if a Wiener filter is generated, no information about the Wiener filter is included when the Wiener filter is not actually used.

(4) ON/OFF information and block size information about filters for each block

· The flag (block_filter_on_off_flag) showing whether or not to perform the ON/OFF operation (whether or not perform the filtering process) for each block in the frame currently processed.
· Only when block_filter_on_off_flag is set to ON, the block size information (index) and the ON/OFF information about the filtering process for each block are included.

In this embodiment, the example in which the pieces of information (1) to (4) are included in the filter information is shown. The number of Wiener filters, the number of taps of each Wiener filter, and the block size for ON/OFF can be held by both the image encoding device and the image decoding device as information determined in common in the image encoding device and the image decoding device, instead of encoding and transmitting the pieces of information between them.

Furthermore, although in the above explanation Fig. 3 is explained as a concrete example of the process performed by the loop filter 6, steps ST9 to ST16 can be omitted and the process of not carrying out the ON/OFF operation for the filtering process for each block ((4) is not included in the filter information) can be included as a part of the process performed by the loop filter 6.

As mentioned above, the filter information outputted from the filter designing and processing unit 13 is entropy-encoded by the variable length encoding part 8, and is transmitted to the image decoding device.

Fig. 6 is an explanatory drawing showing an example of the bit stream generated by the variable length encoding part 8.

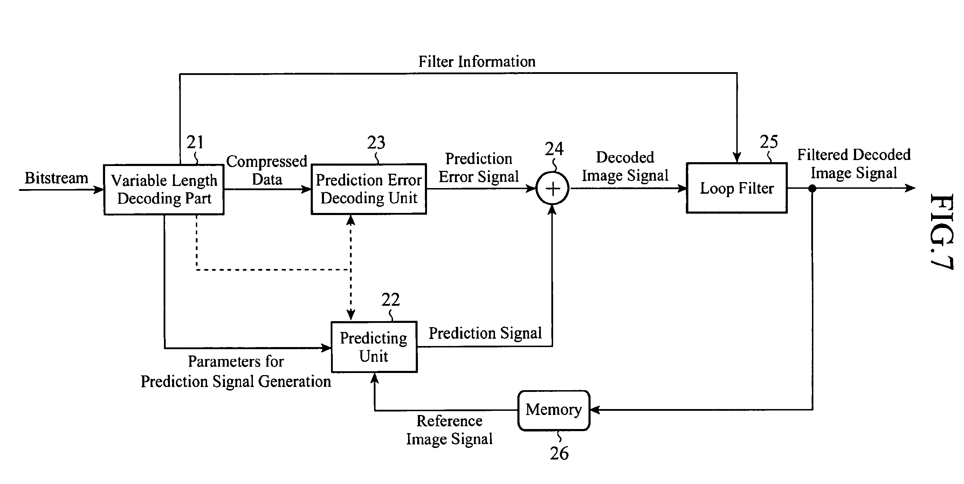

Fig. 7 is a block diagram showing the image decoding device in accordance with Embodiment 1 of the present invention.

In Fig. 7, when receiving the bit stream from the image encoding device, a variable length decoding part 21 carries out a process of variable-length-decoding compressed data, filter information, and parameters for prediction signal generation which are included in the bit stream. The variable length decoding part 21 constructs a variable length decoding unit.

A predicting unit 22 carries out a process of generating a prediction signal showing a prediction image by using the parameters for prediction signal generation which the variable length decoding part 21 has variable-length-decoded. Particularly, in a case in which a motion vector is used as a parameter for prediction signal generation, the predicting unit carries out a process of generating a prediction signal from the motion vector and a reference image signal stored in a memory 26.

The predicting unit 22 constructs a prediction image generating unit.

A prediction error decoding unit 23 carries out a process of performing inverse quantization on the compressed data which the variable length decoding part 21 has variable-length-decoded, and then performing an inverse DCT process on the compressed data inverse-quantized thereby to calculate a prediction error signal corresponding to the prediction error signal outputted from the predicting unit 2 shown in Fig. 1.

An adder 24 carries out a process of adding the prediction error signal calculated by the prediction error decoding unit 23 and the prediction signal generated by the predicting unit 22 to calculate a decoded image signal corresponding to the decoded image signal outputted from the adder 5 shown in Fig. 1.

A decoding unit is comprised of the prediction error decoding unit 23 and the adder 24.

A loop filter 25 carries out a filtering process of compensating for a distortion superimposed onto the decoded image signal outputted from the adder 24, and then carries out a process of outputting the decoded image signal filtered thereby to outside the image decoding device and to the memory 26 as a filtered decoded image signal. The loop filter 25 constructs a filtering unit.

The memory 26 is a recording medium for storing the filtered decoded image signal outputted from the loop filter 25 as the reference image signal.

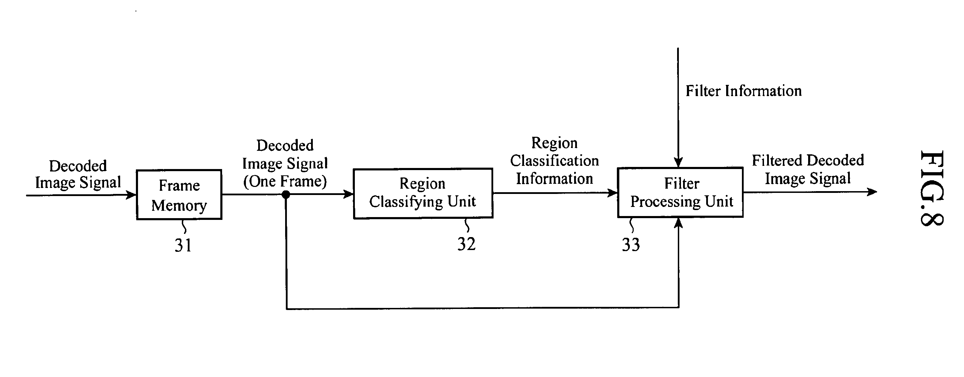

Fig. 8 is a block diagram showing the loop filter 25 of the image decoding device in accordance with Embodiment 1 of the present invention.

In Fig. 8, a frame memory 31 is a recording medium for storing only one frame of the decoded image signal outputted from the adder 24.

A region classifying unit 32 carries out a process of extracting a feature quantity of each of the regions which construct a decoded image shown by the single frame of the decoded image signal stored in the frame memory 31 to classify each of the regions belongs into the class to which the region belongs according to the feature quantity, like the region classifying unit 12 shown in Fig. 2.

A filter processing unit 33 carries out a process of generating a Wiener filter which is applied to the class into which each of the regions is classified by the region classifying unit 32 with reference to the filter information which the variable length decoding part 21 has variable-length-decoded to compensate for the distortion superimposed onto the region by using the Wiener filter.

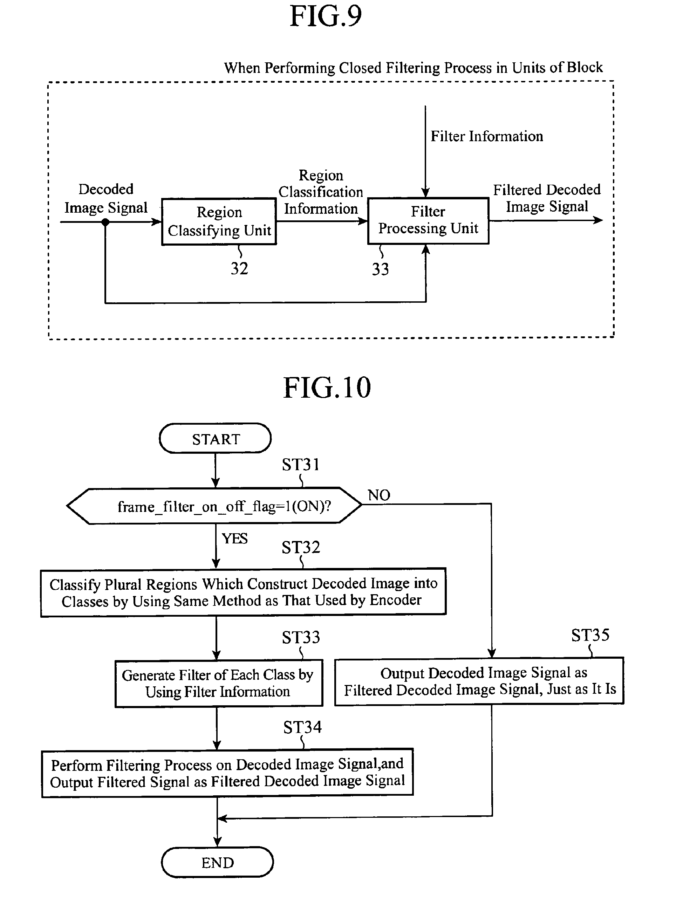

Although in the example of Fig. 8 the loop filter 25 in which the frame memory 31 is installed as the first stage thereof is shown, in a case of performing a closed filtering process on each macro block, the loop filter can be constructed in such a way that the frame memory 31 disposed as the first stage thereof is removed, as shown in Fig. 9, and the region classifying unit 32 extracts a feature quantity of each of the regions which construct the decoded image of the macro block.

In this case, the image encoding device needs to perform the filtering process on each macro block independently.

Next, the operation of the image decoding device will be explained.

When receiving the bit stream from the image encoding device, the variable length decoding part 21 variable-length-decodes compressed data, filter information, and parameters for prediction signal generation which are included in the bit stream.

When receiving the parameters for prediction signal generation, the predicting unit 22 generates a prediction signal from the parameters for prediction signal generation. Particularly, when receiving a motion vector as the parameter for prediction signal generation, the predicting unit generates a prediction signal from the motion vector and the reference image signal stored in the memory 26.

When receiving the compressed data from the variable length decoding part 21, the prediction error decoding unit 23 performs inverse quantization on the compressed data and then performs an inverse DCT process on the compressed data inverse-quantized thereby to calculate a prediction error signal corresponding to the prediction error signal outputted from the predicting unit 2 shown in Fig. 1.

After the prediction error decoding unit 23 calculates the prediction error signal, the adder 24 adds the prediction error signal and the prediction signal generated by the predicting unit 22 to calculate a decoded image signal corresponding to the local decoded image signal outputted from the adder 5 shown in Fig. 1.

When receiving the decoded image signal from the adder 24, the loop filter 25 carries out the filtering process of compensating for the distortion superimposed onto the decoded image signal, and outputs the decoded image signal filtered thereby to outside the image decoding device as a filtered decoded image signal while storing the filtered decoded image signal in the memory 26 as the reference image signal.

Hereafter, the process carried out by the loop filter 25 will be explained concretely.

Fig. 10 is a flow chart showing the process carried out by the loop filter 25 of the image decoding device in accordance with Embodiment 1 of the present invention.

First, the frame memory 31 of the loop filter 25 stores only one frame of the decoded image signal outputted from the adder 24.

When the flag (frame_filter_on_off_flag) included in the filter information is set to ON (shows that the filtering process is carried out) (step ST31), the region classifying unit 32 extracts a feature quantity of each of the regions which construct the decoded image shown by the single frame of the decoded image signal stored in the frame memory 31, and classifies each of the regions into the class to which the region belongs according to the feature quantity, like the region classifying unit 12 shown in Fig. 2 (step ST32).

When receiving the filter information from the variable length decoding part 21, the filter processing unit 33 generates a Wiener filter which is applied to the class to which each of the regions classified by the region classifying unit 32 belongs with reference to the filter information (step ST33).

For example, when the number of Wiener filters (the number of classes to each of which one or more regions belong) is expressed as N, the number of taps of each Wiener filter is

$$W_i = \begin{pmatrix} w_{i11} & w_{i12} & \cdots & w_{i1L} \\ w_{i21} & w_{i22} & \cdots & w_{i2L} \\ \vdots & \vdots & \ddots & \vdots \\ w_{iL1} & w_{iL2} & \cdots & w_{iLL} \end{pmatrix} \quad (3)$$

After generating the N Wiener filters $W_i$, the filter processing unit 33 compensates for the distortion superimposed onto the single frame of the decoded image signal by using these Wiener filters, and outputs the distortion-compensated decoded image signal to outside the image decoding device and to the memory 26 as the filtered decoded image signal (step ST34).

The filtered decoded image signal s hat is expressed by the following equation (4).

$$\hat{s} = S \cdot W_{id(s)} \quad (4)$$

A matrix S is a group of reference signals of $L \times L$ pixels including the decoded image signal s which is the target for filtering, and id (s) is the number (filter numbers) of the class which is determined by the region classifying unit 32 and to which the region including the signal s belongs.

When performing the above-mentioned filtering process, the filter processing unit 33 refers to the flag (block_filter_on_off_flag) included in the filter information, and, when the flag (block_filter_on_off_flag) is set to 1 (ON), refers to the block size information included in the filter information and then identifies the plurality of blocks (K) which construct the decoded image, and, after that, carries out the filtering process with reference to the information included in the filter information and showing whether or not to carry out the filtering process for each block (K).

More specifically, when flag (block_filter_on_off_flag) is set to 1 (ON), the filter processing unit 33 performs the filtering process on the decoded image signal in the block (K), on which the filtering unit is going to perform the filtering process, among the blocks which construct the decoded image, by using the Wiener filter of the class to which the region including the block (K) belongs while outputting the yet-to-be-filtered decoded image signal in the block (K) which the filtering unit is not going to perform the filtering process to outside the image decoding device and to the memory 26 as the filtered decoded image signal, just as it is.

In contrast, when flag (block_filter_on_off_flag) is set to 0 (OFF), the filter processing unit performs the filtering process on each of all the decoded image signals in the frame currently processed by using the filter corresponding to the class into which each of the regions is classified by the region classifying unit 32.

When the flag (frame_filter_on_off_flag) included in the filter information is set to OFF (the filtering process is not carried out) (step ST31), the filter processing unit 33 does not perform the filtering process on the frame currently processed, and outputs each decoded image signal outputted from the adder 24 to outside the image decoding device and to the memory 26 as the filtered decoded image signal, just as it is (step ST35).

As can be seen from the above description, in the image encoding device in accordance with this Embodiment 1, the loop filter 6 includes the region classifying unit 12 for extracting a feature quantity of each of the regions which construct a local decoded image shown by a local decoded image signal outputted by the adder 5 to classify each of the regions into the class to which the region belongs according to the feature quantity, and the filter designing and processing unit 13 for, for each class to which one or more regions, among the regions which construct the local decoded image, belong, generating a Wiener filter which minimizes the sum of squared errors occurring between the image signal which is the target to be encoded and the local decoded image in each of the one or more regions belonging to the class to compensate for a distortion superimposed onto the one or more regions by using the Wiener filter. Therefore, the image encoding device implements the filtering process according to the local properties of the image, thereby being able to improve the improvement accuracy of the image quality.

Furthermore, in the image decoding device in accordance with this Embodiment 1, the loop filter 25 includes the region classifying unit 32 for extracting a feature quantity of each of the regions which construct a decoded image shown by a decoded image signal outputted by the adder 24 to classify each of the regions to the class to which the region belongs according to the feature quantity, and the filter processing unit 33 for referring to filter information which the variable length decoding part 21 has variable-length-decoded to generate a Wiener filter which is applied to the class to which each region classified by the region classifying unit 32 belongs, and for compensating for a distortion superimposed onto the region by using the Wiener filter. Therefore, the image decoding device implements the filtering process according to the local properties of the image, thereby being able to improve the improvement accuracy of the image quality.

Embodiment 2.

In above-mentioned Embodiment 1, the loop filter in which the filter designing and processing unit 13 generates a Wiener filter for each class to which one or more regions belong, and performs the filtering process on each of the blocks (K) which construct a local decoded image by using the Wiener filter of the class to which the region including the block (K) belongs is shown. As an alternative, for each of the blocks, the loop filter can select a Wiener filter which minimizes the sum of squared errors occurring between the image signal which is the target to be encoded and the local decoded image signal in the block (K) from among Wiener filters which the loop filter generates for each class to which one or more regions belong, and can compensate for a distortion superimposed onto the block (K) by using the Wiener filter selected thereby.

Concretely, a loop filter of this embodiment operates as follows.

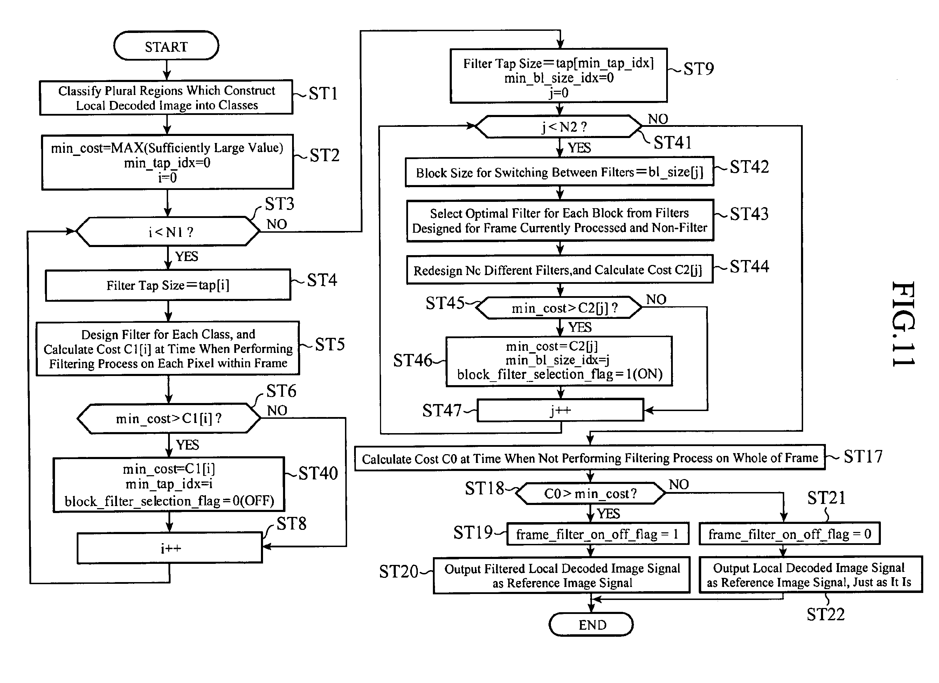

Fig. 11 is a flow chart showing the process carried out by the loop filter 6 of an image encoding device in accordance with Embodiment 2 of the present invention.

A filter designing and processing unit 13 generates a Wiener filter for each class to which one or more regions belong, like that in accordance with above-mentioned Embodiment 1 (steps ST2 to ST8).

In accordance with this Embodiment 2, the filter designing and processing unit does not use a flag (block_filter_on_off_ flag) showing whether or not to carry out a process of selecting whether or not to carry out a filtering process for each block within a frame currently processed, but uses a flag (block_filter_selection_flag) showing whether or not to select a filter which is to be used for each block within the frame currently processed. Furthermore, the flag (block_filter_ selection_flag) is initially set to OFF in step ST40, and is set to ON only when step ST46 is carried out.

As will be mentioned later, only when the flag (block_filter_selection_flag) is set to ON, a block size and filter selection information about each block are included in filter information.

After generating a Wiener filter for each class to which one or more regions belong, the filter designing and processing unit 13 selects an optimal process (e.g. a process which minimizes the sum of squared errors occurring between the image signal which is the target to be encoded and the local decoded image signal in the block (K)) from among a process of performing the filtering process on each of the blocks (K) which construct the local decoded image by selecting a Wiener filter from among Wiener filters which the filter designing and processing unit generates for each class to which one more regions belongs, and a process of not performing the filtering process on each of the blocks (steps ST9, and ST41 to ST47).

More specifically, in a case of generating four Wiener filters $W_1$, $W_2$, $W_3$, and $W_4$ and carrying out the filtering process using each of the four Wiener filters, the filter designing and processing unit selects the Wiener filter $W_3$ which minimizes the sum of squared errors E for the block (K) if the sum of squared errors E in the block (K) has the following inequality among the four filters.

$$E_{W3} < E_{W2} < E_{W4} < E_{W0} < E_{W1}$$

where $E_{w0}$ shows the sum of squared errors E at the time when any filtering process is not carried out.

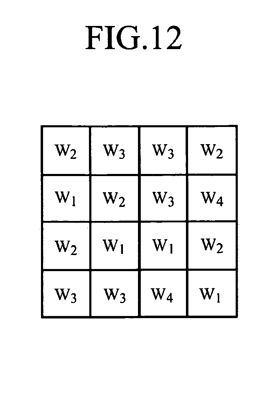

Fig. 12 is an explanatory drawing showing an example of the selection of a Wiener filter for each of the blocks (K) which construct the local decoded image. For example, the Wiener filter $W_2$ is selected for the block (1), and the Wiener filter $W_3$ is selected for the block (2).

When determining to perform the filtering process on the frame currently processed by using the Wiener filters selected, the filter designing and processing unit 13 sets the flag (frame_filter_on_off_flag) to 1 (ON), and carries out the filtering process which minimizes the cost in steps ST1 to ST9 and ST40 to ST47 and outputs the local decoded image signal filtered thereby to a memory 7 as a reference image signal (steps ST17 to ST20).

In contrast, when determining not to perform the filtering process on the whole of the frame currently processed (steps ST17 to ST18), the filter designing and processing unit sets the flag (frame_filter_on_off_flag) to zero (OFF), and outputs the yet-to-be-filtered local decoded image signal to the memory 7 as the reference image signal (steps ST21 to ST22).

After generating the Wiener filters and then carrying out the filtering process in the above-mentioned way, the filter designing and processing unit 13 outputs the filter information about the Wiener filters to a variable length encoding part 8.

The flag (frame_filter_on_off_flag) showing whether or not to carry out the filtering process within the frame currently processed is included in the filter information.

When this flag is set to ON (shows that the filtering process is carried out), information as will be shown below is included in the filter information.

(1) The number of Wiener filters (the number of classes to each of which one or more regions belong)

T he number of Wiener filters can differ for each frame.

(2) Information (index) about the number of taps of each Wiener filter

· When all the filters are common in the frame, a common number of taps is included.
· When the number of taps differs for each filter, the number of taps of each filter is included.

(3) Information about the coefficients of an actually-used Wiener filter (a Wiener filter of each class to which one or more regions belong)

· Even if a Wiener filter is generated, no information about the Wiener filter is included when the Wiener filter is not actually used.

(4) Filter selection information about each block and block size information

· The flag (block_filter_selection_flag) showing whether or not to select a filter for each block in units of a frame.
· Only when block_filter_on_off_flag is set to ON, the block size information (index) and the selection information about each block are included.

In this embodiment, the example in which the pieces of information (1) to (4) are included in the filter information is shown. The number of Wiener filters, the number of taps of each Wiener filter, and the block size can be held by both the image encoding device and an image decoding device as information determined in common in the image encoding device and the image decoding device, instead of encoding and transmitting the pieces of information between them.

A loop filter 25 in the image decoding device carries out the following process.

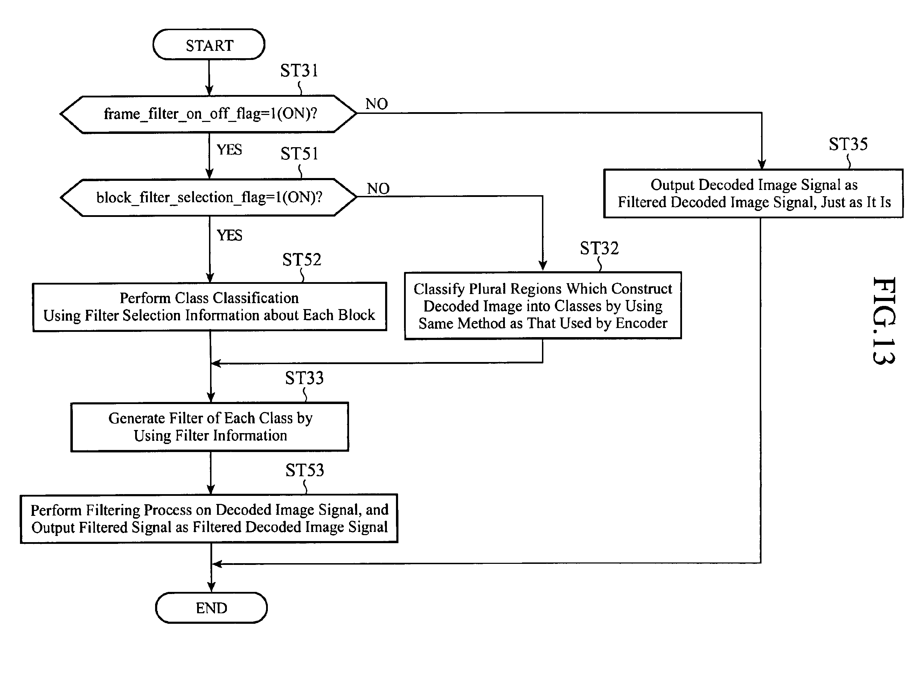

Fig. 13 is a flow chart showing the process carried out by the loop filter 25 of the image decoding device in accordance with Embodiment 2 of the present invention.

First, a frame memory 31 of the loop filter 25 stores only one frame of a decoded image signal outputted from an adder 24. When the flag (frame_filter_on_off_flag) included in the filter information is set to ON (shows that a filtering process is carried out) (step ST31), and when the flag (block_filter_selection_flag) included in the filter information is set to OFF (step ST51), a region classifying unit 32 extracts a feature quantity of each of the regions which construct the decoded image shown by the single frame of the decoded image signal stored in the frame memory 31, and classifies each of the regions into the class to which the region belongs according to the feature quantity (step ST32), like that in accordance with above-mentioned Embodiment 1.

In contrast, when the flag (frame_filter_on_off_flag) included in the filter information is set to ON (shows that the filtering process is carries out) (step ST31), and when the flag (block_filter_selection_flag) included in the filter information is set to ON (step ST51), the region classifying unit refers to the information about the size of each block, which is the unit for selection, and the filter selection information about each block among the pieces of information included in the filter information, and performs class classification for each block (step ST52).

After the region classifying unit 32 classifies each region (each block) into the class to which the region belongs, a filter processing unit 33 refers to the filter information outputted from a variable length decoding part 21, and generates a Wiener filter which is applied to the class to which each region (each block) classified by the region classifying unit 32 belongs (step ST33), like that in accordance with above-mentioned Embodiment 1.

After generating a Wiener filter which is applied to each class, when (block_filter_selection_flag) is set to OFF, the filter processing unit 33 performs the filtering process on each of all the decoded image signals in a frame currently processed by using the generated Wiener filters, and outputs each decoded image signal filtered thereby to outside the image decoding device and to a memory 26 as a filtered decoded image signal (step ST53), like in the case in which the flag (block_filter_on_off_flag) is set to OFF in above-mentioned Embodiment 1.

In contrast, when (block_filter_selection_flag) is set to ON, the filter processing unit 33 compensates for the distortion superimposed onto the decoded image signal in each block by using the Wiener filter which is selected for the block after generating the Wiener filter which is applied to each class, and outputs the decoded image signal filtered thereby to outside the image decoding device and to the memory 26 as a filtered decoded image signal (step ST53). The filtered decoded image signal s hat at this time is expressed by the following equation (5).

$$\hat{s} = S \cdot W_{id\_2(bl)} \qquad\qquad (5)$$

A matrix S is a group of reference signals of L×L pixels including the decoded image signal s which is the target for filtering. id_2 (bl) is the filter selection information in a block bl in which the decoded image signal s is included, i.e. the class number (filter number) of the block bl.
id_2(bl)=0 shows a block on which any filtering process is not performed. Therefore, any filtering process is not performed on the block.
As can be seen from the above description, because the image encoding device in accordance with this Embodiment 2 is constructed in such a way that, for each of the blocks (K) which construct a decoded image, the loop filter selects a Wiener filter which minimizes the sum of squared errors occurring between the image signal which is the target to be encoded and the decoded image signal in the block (K) from among Wiener filters which the loop filter generates for each class to which one or more regions belong, and compensates for the distortion superimposed onto the block (K) by using the Wiener filter selected thereby, there is provided an advantage of further improving the improvement accuracy of the image quality compared with above-mentioned Embodiment 1.

Embodiment 3.

In above-mentioned Embodiment 2, the method of selecting, from among the process of performing the filtering process on each of the blocks (K) which construct a decoded image by using one of Wiener filters which are generated for each class to which one more regions in a frame currently processed belongs, and the process of not performing the filtering process on each block, the process which minimizes the sum of squared errors occurring between the image signal which is the target to be encoded and the local decoded image signal in the block (K) is shown. As an alternative, from among a process of preparing one or more Wiener filters in advance, and using one of the one or more Wiener filters which have been prepared in advance, the process of using one of Wiener filters which are generated for each class to which one more regions in a frame currently processed belongs, and the process of not performing the filtering process on each block, the loop filter can select the process which minimizes the sum of squared errors occurring between the image signal which is the target to be encoded and the local decoded image signal in the block (K).

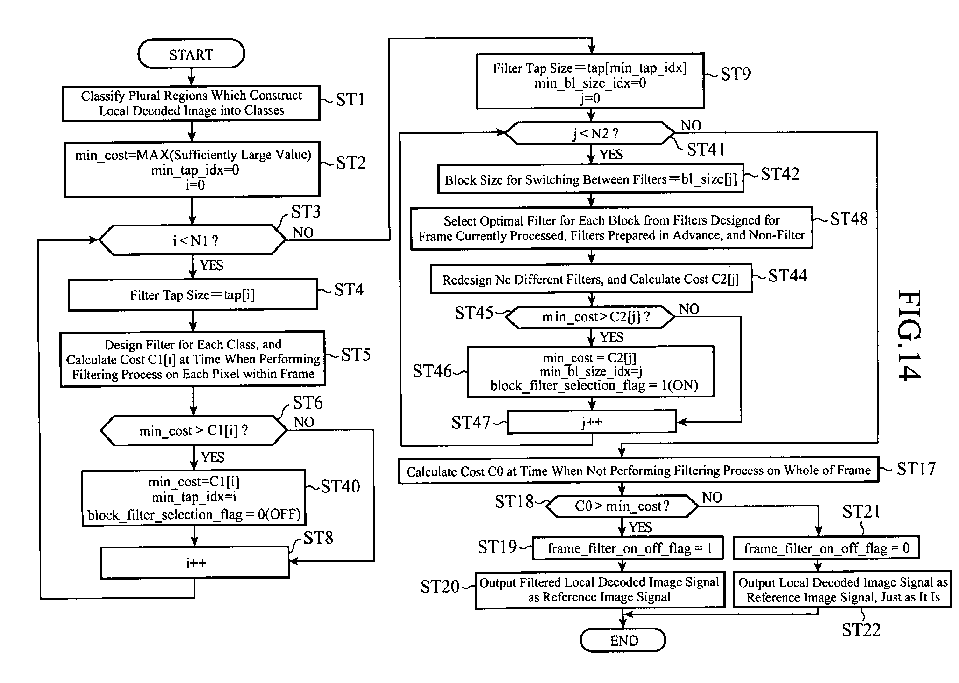

Fig. 14 is a flow chart showing the process carried out by a loop filter 6 of an image encoding device in accordance with Embodiment 3 of the present invention.
Because this Embodiment 3 provides a wider choice of Wiener filters compared with that in above-mentioned Embodiment 2, the probability that an optimal Wiener filter is selected is increased compared with above-mentioned Embodiment 2.
Because a method of selecting a Wiener filter is the same as that shown in above-mentioned Embodiment 2, the explanation of the method will be omitted hereafter.
Because the process carried out by an image decoding device is the same as that in accordance with above-mentioned Embodiment 2, the explanation of the process will be omitted hereafter.

Embodiment 4.

In above-mentioned Embodiment 2, the method of selecting, from among the process of performing the filtering process on each of the blocks (K) which construct a decoded image by using one of Wiener filters which are generated for each class to which one more regions in a frame currently processed belongs, and the process of not performing the filtering process on each block, the process which minimizes the sum of squared errors occurring between the image signal which is the target to be encoded and the local decoded image signal in the block (K) is shown. As an alternative, from among the process of using one of Wiener filters which are generated for each class to which one more regions in a frame currently processed belongs, a process of using one of Wiener filters which have been used for an already-encoded frame, and the process of not performing the filtering process on each block, the loop filter can select the process which minimizes the sum of squared errors occurring between the image signal which is the target to be encoded and the local decoded image signal in the block (K).

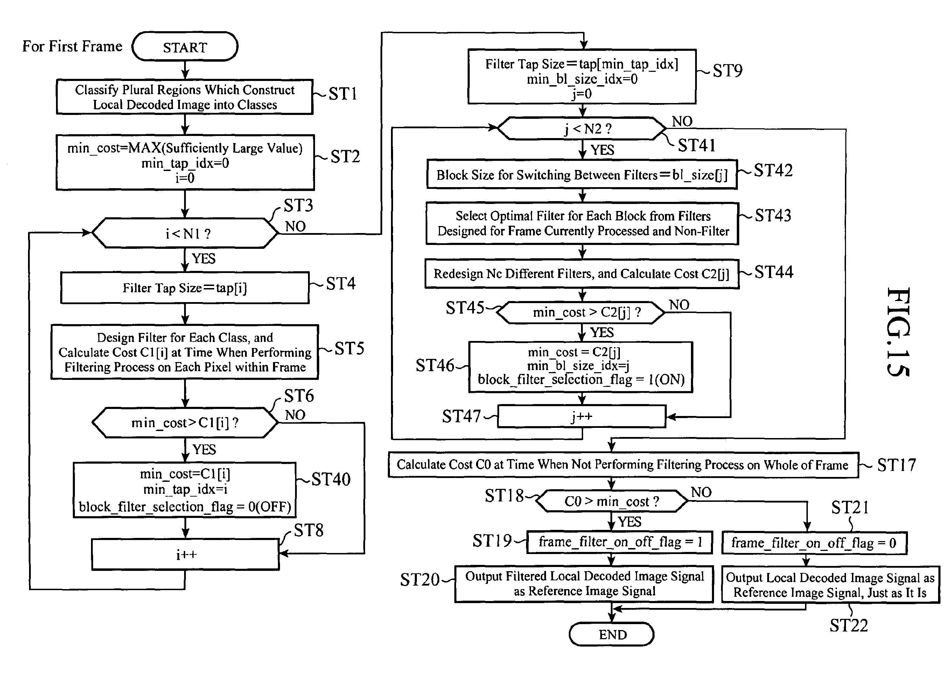

Fig. 15 is a flow chart showing the process on the first frame which is carried out by a loop filter 6 of an image encoding device, and is the same as the flow chart shown in Fig. 11 in above-mentioned Embodiment 2.

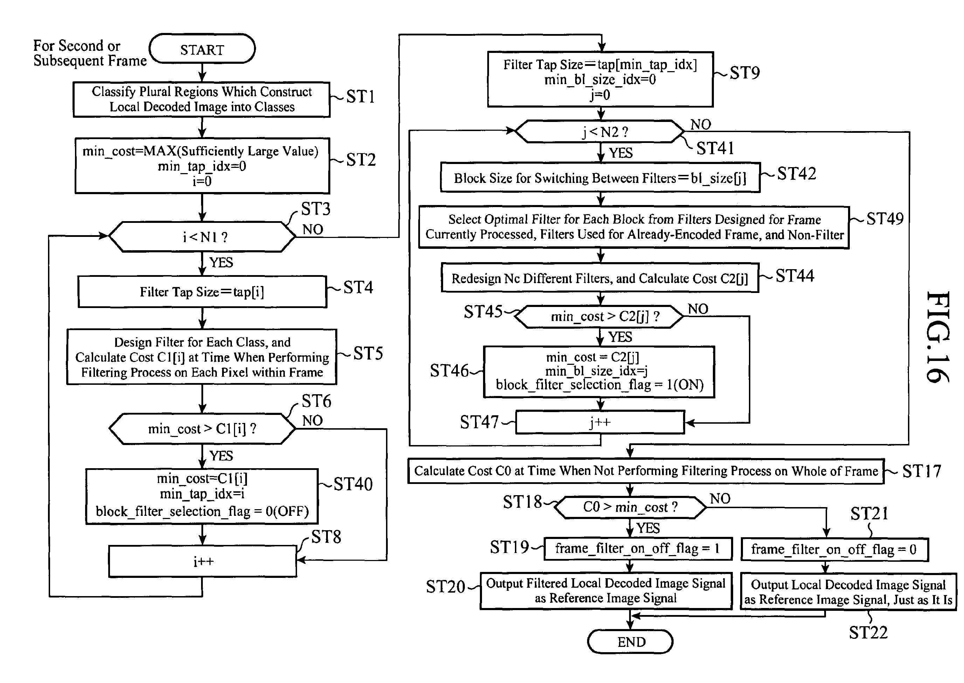

Fig. 16 is a flow chart showing the process on the second frame and subsequent frames which is carried out by the loop filter 6.

As a reference method of referring to a Wiener filter which has been used for an already-encoded frame, for example, reference methods as will be shown below can be provided.
Method (1) of referring to a Wiener filter which has been used for a block at a position shown by a representative motion vector which is calculated in a block which is a target for filtering.
Method (2) of referring to a Wiener filter which has been used for a block located in a frame which is the nearest in time to a block which is a target for filtering, and located at the same position as the target block.
Method (3) of referring to a Wiener filter which has been used for a block having the highest cross-correlation among the blocks in the already-encoded frame.
In the case of using the method (3), an identical block searching process needs to be carried out by the image encoding device and an image decoding device.

Because this Embodiment 4 provides a wider choice of Wiener filters compared with that in above-mentioned Embodiment 2, the probability that an optimal Wiener filter is selected is increased compared with above-mentioned Embodiment 2.
Because a method of selecting a Wiener filter is the same as that shown in above-mentioned Embodiment 2, the explanation of the method will be omitted hereafter.
Because the process carried out by the image decoding device is the same as that in accordance with above-mentioned Embodiment 2, the explanation of the process will be omitted hereafter.

Industrial Applicability

The image encoding device, the image decoding device, the image encoding method, and the image decoding method in accordance with the present invention can improve the improvement accuracy of the imaging quality. The image encoding device and the image encoding method are suitable for use as an image encoding device or the like for and an image encoding method or the like of compression-encoding and transmitting an image, respectively, and the image decoding device and the image decoding method are suitable for use as an image decoding device or the like for and an image decoding method or the like of decoding encoded data transmitted by the image encoding device to reconstruct an image, respectively.

**Claims**

1. An image encoding device comprising:

a prediction processing unit for detecting a parameter for prediction signal generation from an inputted image and a reference image to generate a prediction image from said parameter for prediction signal generation and said reference image, and for calculating a difference image which is a difference between said inputted image and said prediction image;
a difference image compression unit for compressing the difference image calculated by said prediction processing unit;
a local decoding unit for decoding the difference image compressed by said difference image compression unit and adding the difference image decoded thereby and the prediction image generated by said prediction processing unit to acquire a local decoded image;
a filtering unit for carrying out a filtering process of compensating for a distortion superimposed onto the local decoded image acquired by said local decoding unit, and for outputting the local decoded image filtered thereby to said prediction processing unit as the reference image; and
a variable length encoding unit for variable-length-encoding the parameter for prediction signal · generation detected by said prediction processing unit, the difference image compressed by said difference image compression unit, and information about a filter which is used when said filtering unit carries out the filtering process, wherein
said filtering unit includes a region classifying unit for extracting a feature quantity of each of the regions which construct the local decoded image acquired by said local decoding unit to classify each of the regions into a class to which said each of the regions belongs according to said feature quantity, and a filter designing and processing unit for, for each class to which one or more regions, among the regions which construct said local decoded image, belong, generating a filter which minimizes an error occurring between said inputted image and said local decoded image in each of the one or more regions belonging to said each class to compensate for a distortion superimposed onto said one or more regions by using said filter.

2. The image encoding device according to claim 1, wherein the filter designing and processing unit compares errors occurring between the inputted image and the local decoded image in each of the blocks which construct the local decoded image acquired by the local decoding unit between before and after the filtering process, and performs the filtering process on a block in which the error occurring after the filtering process is smaller than the error occurring before the filtering process and outputs the filtered local decoded image to the prediction processing unit as the reference image while not performing the filtering process on a block in which the error occurring after the filtering process is equal to or larger than the error occurring before the filtering process and outputs the yet-to-be-filtered local decoded image to said prediction processing unit as the reference image.

3. The image encoding device according to claim 1, wherein the filter designing and processing unit selects a filter which minimizes an error occurring between the inputted image and the local decoded image in each of the blocks which construct the local decoded image acquired by the local decoding unit from among filters which said filter designing and processing unit generates for each class to which one or more regions belong to compensate for a distortion superimposed onto said each block by using said filter.

4. The image encoding device according to claim 1, wherein the filter designing and processing unit selects a filter which minimizes an error occurring between the inputted image and the local decoded image in each of the blocks which construct the local decoded image acquired by the local decoding unit from among filters which the filter designing and processing unit generates for each class to which one or more regions belong and filters prepared in advance to compensate for a distortion superimposed onto said each block by using said filter.

5. The image encoding device according to claim 1, wherein the filter designing and processing unit selects a filter which minimizes an error occurring between the inputted image and the local decoded image in each of the blocks which construct the local decoded image acquired by the local decoding unit from among filters which the filter designing and processing unit generates for each class to which one or more regions belong and filters used for an already-encoded frame to compensate for a distortion superimposed onto said each block by using said filter.

6. An image decoding device comprising:

a variable length decoding unit for variable-length-decoding a parameter for prediction signal generation, a compressed difference image, and filter information, which are included in a stream;
a prediction image generating unit for generating a prediction image from both the parameter for prediction signal generation which said variable length decoding unit has variable-length-decoded, and a reference image;
a decoding unit for decoding the compressed difference image which said variable length decoding unit has variable-length-decoded, and adding said difference image and the prediction image generated by said prediction image generating unit to acquire a decoded image; and
a filtering unit for carrying out a filtering process of compensating for a distortion superimposed onto the decoded image acquired by said decoding unit, and for outputting the decoded image filtered thereby to said prediction image generating unit as the reference image, as well as to outside said image decoding device as a filtered decoded image, wherein
said filtering unit includes a region classifying unit for extracting a feature quantity of each of the regions which construct the decoded image acquired by said decoding unit to classify each of the regions to a class to which said each of the regions belongs according to said feature quantity, and a filter processing unit for referring to the filer information which said variable length decoding unit has variable-length-decoded to generate a filter which is applied to the class to which each region classified by said region classifying unit belongs, and compensate for a distortion superimposed onto a region belonging to said class by using said filter.

7. The image decoding device according to claim 6, wherein when the variable length decoding unit variable-length-decodes information included in the stream and showing whether or not to perform the filtering process on each of the blocks which construct the decoded image, the filter processing unit performs the filtering process on a block which the information indicates is subjected to the filtering process, among the blocks which construct said decoded image, and outputting the filtered decoded image to the prediction image generating unit as the reference image, as well as to outside said image decoding device as the filtered decoded image, while not performing the filtering process on a block which the information indicates is not subjected to the filtering process, among the blocks which construct said decoded image, and outputting the yet-to-be-filtered decoded image to said prediction image generating unit as the reference image, as well as to outside said image decoding device as the filtered decoded image.

8. An image decoding device comprising:

a variable length decoding unit for variable-length-decoding a parameter for prediction signal generation, a compressed difference image, and filer information including filter generation information and filter selection information about each small region, which are included in a stream;

a prediction image generating unit for generating a prediction image from both the parameter for prediction signal generation which said variable length decoding unit has variable-length-decoded, and a reference image;

a decoding unit for decoding the compressed difference image which said variable length decoding unit has variable-length-decoded, and adding said difference image and the prediction image generated by said prediction image generating unit to acquire a decoded image; and

a filtering unit for carrying out a filtering process of compensating for a distortion superimposed onto the decoded image acquired by said decoding unit, and for outputting the decoded image filtered thereby to said prediction image generating unit as the reference image, as well as to outside said image decoding device as a filtered decoded image, wherein

said filtering unit includes a filter processing unit for referring to the filer information including the filter generation information and the filter selection information about each small region which said variable length decoding unit has variable-length-decoded to compensate for a distortion superimposed onto each small region.

9. The image decoding device according to claim 8, wherein when the variable length decoding unit variable-length-decodes selection information included in the stream, and showing a used filter and including information whether or not to perform the filtering process on each of the blocks which construct the decoded image, the filter processing unit performs a filter selection according to said selection information and the filtering process on a block which the information indicates is subjected to the filtering process, among the blocks which construct said decoded image, and outputting the filtered decoded image to the prediction image generating unit as the reference image, as well as to outside said image decoding device as the filtered decoded image, while not performing the filtering process on a block which the information indicates is not subjected to the filtering process, among the blocks which construct said decoded image, and outputting the yet-to-be-filtered decoded image to said prediction image generating unit as the reference image, as well as to outside said image decoding device as the filtered decoded image.

10. An image encoding method comprising:

a prediction processing step of a prediction processing unit detecting a parameter for prediction signal generation from an inputted image and a reference image to generate a prediction image from said parameter for prediction signal generation and said reference image, and calculating a difference image which is a difference between said inputted image and said prediction image;

a difference image compression processing step of a difference image compression unit compressing the difference image calculated by said prediction processing unit;

a local decoding processing step of a local decoding unit decoding the difference image compressed by said difference image compression unit and adding the difference image decoded thereby and the prediction image generated by said prediction processing unit to acquire a local decoded image;

a filtering processing step of a filtering unit carrying out a filtering process of compensating for a distortion superimposed onto the local decoded image acquired by said local decoding unit, and outputting the local decoded image filtered thereby to said prediction processing unit as the reference image; and

a variable length encoding processing step of a variable length encoding unit variable-length-encoding the parameter for prediction signal generation detected by said prediction processing unit, the difference image compressed by said difference image compression unit, and information about a filter which is used when said filtering unit carries out the filtering process, wherein

a region classifying unit of said filtering unit includes a region classification processing step of extracting a feature quantity of each of the regions which construct the local decoded image acquired by said local decoding unit to classify each of the regions into a class to which said each of the regions belongs according to said feature quantity, and a filter designing and processing unit of said filtering unit includes a filter processing step of, for each class to which one or more regions, among the regions which construct said local decoded image, belong, generating a filter which minimizes an error occurring between said inputted image and said local decoded image in each of the one or more regions belonging to said each class to compensate for a distortion superimposed onto said one or more regions by using said filter.

**11.** An image decoding method comprising:

a variable length decoding processing step of a variable length decoding unit variable-length-decoding a parameter for prediction signal generation, a compressed difference image, and filter information, which are included in a stream;

a prediction image generating processing step of a prediction image generating unit generating a prediction image from both the parameter for prediction signal generation which said variable length decoding unit has variable-length-decoded, and a reference image;

a decoding process step of a decoding unit decoding the compressed difference image which said variable length decoding unit has variable-length-decoded, and adding said difference image and the prediction image generated by said prediction image generating unit to acquire a decoded image; and

a filtering processing step of a filtering unit carrying out a filtering process of compensating for a distortion superimposed onto the decoded image acquired by said decoding unit, and outputting the decoded image filtered thereby to said prediction image generating unit as the reference image, as well as to outside said filtering unit as a filtered decoded image, wherein

a region classifying unit of said filtering unit includes a region classification process step of extracting a feature quantity of each of the regions which construct the decoded image acquired by said decoding unit to classify each of the regions to a class to which said each of the regions belongs according to said feature quantity, and a filter processing unit of said filtering unit includes a filter processing step of referring to the filter information which said variable length decoding unit has variable-length-decoded to generate a filter which is applied to the class to which each region classified by said region classifying unit belongs, and compensate for a distortion superimposed onto a region belonging to said class by using said filter.

**12.** An image decoding device comprising:

a variable length decoding processing step of a variable length decoding unit variable-length-decoding a parameter for prediction signal generation, a compressed difference image, and filter information including filter generation information and filter selection information about each small region, which are included in a stream;

a prediction image generating processing step of a prediction image generating unit generating a prediction image from both the parameter for prediction signal generation which said variable length decoding unit has variable-length-decoded, and a reference image;

a decoding process step of a decoding unit decoding the compressed difference image which said variable length decoding unit has variable-length-decoded, and adding said difference image and the prediction image generated by said prediction image generating unit to acquire a decoded image; and

a filtering processing step of a filtering unit carrying out a filtering process of compensating for a distortion superimposed onto the decoded image acquired by said decoding unit, and outputting the decoded image filtered thereby to said prediction image generating unit as the reference image, as well as to outside said filtering unit as a filtered decoded image, wherein

a filter processing unit of said filtering unit includes a filter processing step of referring to the filter information including the filter generation information and the filter selection information about each small region which said variable length decoding unit has variable-length-decoded to compensate for a distortion superimposed onto each small region.

# FIG.1

# FIG.2

**FIG.3**

START

Classify Plural Regions Which Construct Local Decoded Image into Classes — ST1

min_cost=MAX(Sufficiently Large Value) min_tap_idx=0 i=0 — ST2

ST3 i<N1 ? NO

YES

Filter Tap Size=tap[i] — ST4

Design Filter for Each Class, and Calculate Cost C1[i] at Time When Performing Filtering Process on Each Pixel within Frame — ST5

ST6 min_cost>C1[i] ? NO

YES

min_cost=C1[i] min_tap_idx=i block_filter_on_off_flag = 0(OFF) — ST7

ST8 i++

Filter Tap Size=tap[min_tap_idx] min_bl_size_idx=0 j=0 — ST9

ST10 j<N2 ? NO

YES

Switch Between ON and OFF of Filter Block Size=bl_size[j] — ST11

Determine Whether or Not to Carry out Filtering Process for Each Block (Example of Evaluated Value: Squared Errors) — ST12

Redesign Filter Only for Region in Filter ON State, and Calculate Cost C2[j] — ST13

ST14 min_cost>C2[j] ? NO

YES

min_cost=C2[j] min_bl_size_idx=j block_filter_on_off_flag = 1(ON) — ST15

ST16 j++

Calculate Cost C0 at Time When Not Performing Filtering Process on Whole of Frame — ST17

ST18 C0>min_cost? NO

YES

ST19 frame_filter_on_off_flag = 1

ST21 frame_filter_on_off_flag = 0

ST20 Output Filtered Local Decoded Image Signal as Reference Image Signal

Output Local Decoded Image Signal as Reference Image Signal, Just as It Is — ST22

END

# FIG.4

| A | B |
|---|---|
| C | D |

⟹

| Class 3 | Class 5 |
|---------|---------|
| Class 3 | Class 6 |

# FIG.5

A

|     |      |      |      |
|-----|------|------|------|
| (1) | (2)  | (3)  | (4)  |
| (5) | (6)  | (7)  | (8)  |
| (9) | (10) | (11) | (12) |
| (13)| (14) | (15) | (16) |

B

D

C

# FIG.6

Sequence Level Header

Filter Information

| | | Slice 1 | Slice 2 | ····· | Slice L |
|---|---|---------|---------|-------|---------|

Picture Level Header

# FIG.7

# FIG.8

Decoded
Image Signal →

Frame
Memory
31

Decoded
Image Signal
(One Frame) →

Region
Classifying Unit
32

Region
Classification
Information →

Filter Information ↓

Filter
Processing Unit
33

→ Filtered Decoded
Image Signal

# FIG.9

When Performing Closed Filtering Process in Units of Block

Filter Information

Decoded Image Signal → Region Classifying Unit → Region Classification Information → Filter Processing Unit → Filtered Decoded Image Signal

32

33

# FIG.10

START

ST31

frame_filter_on_off_flag=1(ON)?  —NO→

YES

ST32

Classify Plural Regions Which Construct Decoded Image into Classes by Using Same Method as That Used by Encoder

ST33

Generate Filter of Each Class by Using Filter Information

ST35

Output Decoded Image Signal as Filtered Decoded Image Signal, Just as It Is

ST34

Perform Filtering Process on Decoded Image Signal,and Output Filtered Signal as Filtered Decoded Image Signal

END

START

Classify Plural Regions Which Construct Local Decoded Image into Classes ~ST1

min_cost=MAX(Sufficiently Large Value)
min_tap_idx=0
i=0 ~ST2

i < N1 ? — NO — ST3

YES

Filter Tap Size = tap[i] ~ST4

Design Filter for Each Class, and Calculate Cost C1[i] at Time When Performing Filtering Process on Each Pixel within Frame ~ST5

min_cost > C1[i] ? — NO — ST6

YES

min_cost=C1[i]
min_tap_idx=i
block_filter_selection_flag = 0(OFF) ~ST40

i++ ~ST8

Filter Tap Size = tap[min_tap_idx]
min_bl_size_idx=0
j=0 ~ST9

j < N2 ? — NO — ST41

YES

Block Size for Switching Between Filters = bl_size[j] ~ST42

Select Optimal Filter for Each Block from Filters Designed for Frame Currently Processed and Non-Filter ~ST43

Redesign Nc Different Filters, and Calculate Cost C2[j] ~ST44

ST45 — min_cost > C2[j] ? — NO

YES

min_cost=C2[j]
min_bl_size_idx=j
block_filter_selection_flag = 1(ON) ~ST46

ST47 — j++

Calculate Cost C0 at Time When Not Performing Filtering Process on Whole of Frame — ST17

ST18 — C0 > min_cost? — NO — ST21

YES

ST19 — frame_filter_on_off_flag = 1

frame_filter_on_off_flag = 0

ST20 — Output Filtered Local Decoded Image Signal as Reference Image Signal

Output Local Decoded Image Signal as Reference Image Signal, Just as It Is

ST22

END

FIG.11

EP 2 445 216 A1

26

# FIG.12

| W$_2$ | W$_3$ | W$_3$ | W$_2$ |
|-------|-------|-------|-------|
| W$_1$ | W$_2$ | W$_3$ | W$_4$ |
| W$_2$ | W$_1$ | W$_1$ | W$_2$ |
| W$_3$ | W$_3$ | W$_4$ | W$_1$ |

FIG.13

EP 2 445 216 A1

**FIG.14**

```
                    START
                      │
                      ▼
    ┌─────────────────────────────────┐
    │ Classify Plural Regions Which Construct │ ~ST1
    │ Local Decoded Image into Classes  │
    └─────────────────────────────────┘
                      │
                      ▼
    ┌─────────────────────────────────┐
    │ min_cost=MAX(Sufficiently Large Value) │ ~ST2
    │ min_tap_idx=0                     │
    │ i=0                              │
    └─────────────────────────────────┘
                      │
                      ▼      ST3
              ◇─────────────◇  NO
              │   i<N1 ?    │────────┐
              ◇─────────────◇        │
                    │ YES            │
                    ▼                │
    ┌─────────────────────────────┐  │
    │ Filter Tap Size=tap[i]      │ ~ST4
    └─────────────────────────────┘  │
                    │                │
                    ▼                │
    ┌─────────────────────────────┐  │
    │ Design Filter for Each Class, and │ ~ST5
    │ Calculate Cost C1[i] at Time When Performing │
    │ Filtering Process on Each Pixel within Frame │
    └─────────────────────────────┘  │
                    │                │
                    ▼      ST6       │
              ◇─────────────◇  NO    │
              │ min_cost > C1[i] ? │──┤
              ◇─────────────◇        │
                    │ YES            │
                    ▼                │
    ┌─────────────────────────────┐  │
    │ min_cost=C1[i]              │ ~ST40
    │ min_tap_idx=i              │
    │ block_filter_selection_flag = 0(OFF) │
    └─────────────────────────────┘  │
                    │      ST8       │
                    ▼◄───────────────┘
    ┌─────────────────────────────┐
    │            i++              │
    └─────────────────────────────┘
```

```
    ┌─────────────────────────────────┐
    │ Filter Tap Size=tap[min_tap_idx] │ ~ST9
    │ min_bl_size_idx=0                │
    │ j=0                             │
    └─────────────────────────────────┘
                      │
                      ▼
              ◇─────────────◇  NO
              │   j<N2 ?    │────────────┐
              ◇─────────────◇  ST41      │
                    │ YES               │
                    ▼                   │
    ┌─────────────────────────────────┐  │
    │ Block Size for Switching Between Filters=bl_size[j] │ ~ST42
    └─────────────────────────────────┘  │
                    │                   │
                    ▼                   │
    ┌─────────────────────────────────────────┐ │
    │ Select Optimal Filter for Each Block from Filters Designed for │ ~ST48
    │ Frame Currently Processed, Filters Prepared in Advance, and Non-Filter │
    └─────────────────────────────────────────┘ │
                    │                   │
                    ▼                   │
    ┌─────────────────────────────────┐  │
    │ Redesign Nc Different Filters, and Calculate Cost C2[j] │ ~ST44
    └─────────────────────────────────┘  │
                    │                   │
        ST45        ▼                   │
        ◇─────────────────◇  NO         │
        │ min_cost>C2[j] ? │────────┐   │
        ◇─────────────────◇         │   │
                    │ YES           │   │
                    ▼               │   │
    ┌─────────────────────────────┐ │   │
ST46│ min_cost = C2[j]           │ │   │
    │ min_bl_size_idx=j          │ │   │
    │ block_filter_selection_flag = 1(ON) │ │   │
    └─────────────────────────────┘ │   │
                    │◄──────────────┘   │
        ST47        ▼                   │
    ┌─────────────────────────────┐    │
    │            j++             │────┘
    └─────────────────────────────┘
                    │
                    ▼
    ┌─────────────────────────────────────────┐
    │ Calculate Cost C0 at Time When Not Performing Filtering Process on Whole of Frame │ ~ST17
    └─────────────────────────────────────────┘
                    │
        ST18        ▼
        ◇─────────────────◇  NO
        │  C0>min_cost?   │──────────────┐
        ◇─────────────────◇              │  ST21
                    │ YES                │
    ST19            ▼                    ▼
    ┌─────────────────────────┐  ┌─────────────────────────┐
    │ frame_filter_on_off_flag = 1 │  │ frame_filter_on_off_flag = 0 │
    └─────────────────────────┘  └─────────────────────────┘
                    │                    │
    ST20            ▼                    ▼
    ┌─────────────────────────┐  ┌─────────────────────────┐
    │ Output Filtered Local Decoded Image Signal │  │ Output Local Decoded Image Signal as │
    │ as Reference Image Signal │  │ Reference Image Signal, Just as It Is │
    └─────────────────────────┘  └─────────────────────────┘
                    │                    │
                    ▼◄───────────────────┘
                 ( END )              ST22
```

FIG.15

For First Frame

START

Classify Plural Regions Which Construct Local Decoded Image into Classes — ST1

min_cost=MAX(Sufficiently Large Value)
min_tap_idx=0
i=0 — ST2

i < N1 ? — ST3 NO

YES

Filter Tap Size = tap[i] — ST4

Design Filter for Each Class, and Calculate Cost C1[i] at Time When Performing Filtering Process on Each Pixel within Frame — ST5

min_cost > C1[i] ? — ST6 NO

YES

min_cost=C1[i]
min_tap_idx=i
block_filter_selection_flag = 0(OFF) — ST40

i++ — ST8

Filter Tap Size = tap[min_tap_idx]
min_bl_size_idx=0
j=0 — ST9

j < N2 ? — NO ST41

YES

Block Size for Switching Between Filters = bl_size[j] — ST42

Select Optimal Filter for Each Block from Filters Designed for Frame Currently Processed and Non-Filter — ST43

Redesign Nc Different Filters, and Calculate Cost C2[j] — ST44

ST45 — min_cost > C2[j] ? — NO

YES

min_cost = C2[j]
min_bl_size_idx=j
block_filter_selection_flag = 1(ON) — ST46

ST47 — j++

Calculate Cost C0 at Time When Not Performing Filtering Process on Whole of Frame — ST17

ST18 — C0 > min_cost ? — NO — ST21

YES

ST19 — frame_filter_on_off_flag = 1        frame_filter_on_off_flag = 0

ST20 — Output Filtered Local Decoded Image Signal as Reference Image Signal        Output Local Decoded Image Signal as Reference Image Signal, Just as It Is

ST22

END

EP 2 445 216 A1

30

For Second or Subsequent Frame

START

Classify Plural Regions Which Construct Local Decoded Image into Classes ~ST1

min_cost=MAX(Sufficiently Large Value)
min_tap_idx=0
i=0 ~ST2

ST3
i < N1 ?  NO

YES

Filter Tap Size = tap[i] ~ST4

Design Filter for Each Class, and Calculate Cost C1[i] at Time When Performing Filtering Process on Each Pixel within Frame ~ST5

ST6
min_cost > C1[i] ?  NO

YES

min_cost=C1[i]
min_tap_idx=i
block_filter_selection_flag = 0(OFF) ~ST40

ST8
i++

Filter Tap Size = tap[min_tap_idx]
min_bl_size_idx=0
j=0 ~ST9

j < N2 ?  NO ~ST41

YES

Block Size for Switching Between Filters = bl_size[j] ~ST42

Select Optimal Filter for Each Block from Filters Designed for Frame Currently Processed, Filters Used for Already-Encoded Frame, and Non-Filter ~ST49

Redesign Nc Different Filters, and Calculate Cost C2[j] ~ST44

ST45
min_cost > C2[j] ?  NO

YES

min_cost = C2[j]
min_bl_size_idx=j
block_filter_selection_flag = 1(ON) ST46

ST47
j++

Calculate Cost C0 at Time When Not Performing Filtering Process on Whole of Frame ~ST17

ST18
C0 > min_cost ?  NO

YES

ST19
frame_filter_on_off_flag = 1

ST21
frame_filter_on_off_flag = 0

ST20
Output Filtered Local Decoded Image Signal as Reference Image Signal

Output Local Decoded Image Signal as Reference Image Signal, Just as It Is

ST22

END

FIG.16

EP 2 445 216 A1

31

# FIG.17

# FIG.18

s → | Encoding Process | → s' → | Wiener Filter | → $\hat{s}$

e

| **INTERNATIONAL SEARCH REPORT** | International application No. |
|---|---|
| | PCT/JP2010/003492 |

**A. CLASSIFICATION OF SUBJECT MATTER**
*H04N7/32*(2006.01)i

According to International Patent Classification (IPC) or to both national classification and IPC

**B. FIELDS SEARCHED**

Minimum documentation searched (classification system followed by classification symbols)
H04N7/24-7/68

| Documentation searched other than minimum documentation to the extent that such documents are included in the fields searched | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | WO 2008/010929 A2 (THOMSON LICENSING),<br>24 January 2008 (24.01.2008),<br>pages 10 to 11<br>& JP 2009-544222 A & CN 101491101 A<br>& KR 10-2009-0039720 A | 1,6,8,10-12<br>2,7,9<br>3-5 |
| X<br>Y<br>A | WO 2008/075247 A1 (KONINKLIJKE PHILIPS<br>ELECTRONICS N.V.),<br>26 June 2008 (26.06.2008),<br>Abstract<br>& CN 101563926 A & KR 10-2009-0100402 A | 1,6,8,10-12<br>2,7,9<br>3-5 |
| Y | JP 5-56416 A (NEC Corp.),<br>05 March 1993 (05.03.1993),<br>abstract<br>(Family: none) | 2,7,9 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 August, 2010 (11.08.10) | 24 August, 2010 (24.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/003492

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
Document WO 2008/010929 A2 (THOMSON LICENSING), 24 January 2008 (24.01.2008), page 10 to page 11 discloses encoding and decoding devices which are provided with a loop filter that segments a picture to find a filter factor in which a predicted error becomes the minimum for each of the segments on the basis of motion information or local signal characteristics, also document WO 2008/075247 A1 (KONINKLIJKE PHILIPS ELECTRONICS N.V.), 26 June 2008 (26.06.2008), Abstract discloses the same. Thus, the invention of claim 1 is not considered to be novel in relation to the inventions disclosed in the aforementioned documents and has no special technical feature. Consequently, there is no technical relationship (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2010/003492

Continuation of Box No.III of continuation of first sheet(2)

among the inventions of claims 1-12 involving one or more of the same or corresponding special technical features, so that the inventions of claims 1-12 are not considered as being so linked as to form a single general inventive concept.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T.Chujoh ; G.Yasuda ; N.Wada ; T.Watanabe ; T.Yamakage.** Block-based Adaptive Loop Filter. *VCEG-AI18, ITU-T SG16/Q.6 meeting,* July 2008